(19) Europäisches Patentamt
European Patent Office
Office européen des brevets

(11) **EP 2 700 922 B1**

(12) **FASCICULE DE BREVET EUROPEEN**

(45) Date de publication et mention de la délivrance du brevet:
**13.08.2014 Bulletin 2014/33**

(51) Int Cl.:
***G01J 5/08*** *(2006.01)*      ***G01J 5/22*** *(2006.01)*

(21) Numéro de dépôt: **13178436.5**

(22) Date de dépôt: **30.07.2013**

(54) **Détecteur bolométrique d'un rayonnement électromagnétique dans le domaine du térahertz et dispositif de détection matriciel comportant de tels détecteurs**

Bolometrischer Detektor einer elektromagnetischen Strahlung im Terahertzbereich, und Vorrichtung zur Matrixerkennung, die mit solchen Detektoren ausgestattet ist

Bolometric detector of electromagnetic radiation in the terahertz range and matrix detection device comprising such detectors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2012 FR 1257890**

(43) Date de publication de la demande:
**26.02.2014 Bulletin 2014/09**

(73) Titulaire: **Commissariat à l'Énergie Atomique et aux Énergies Alternatives**
**75015 Paris (FR)**

(72) Inventeurs:
- **Ouvrier-Buffet, Jean-Louis**
  **74320 Sevrier (FR)**
- **Meilhan, Jérôme**
  **38000 Grenoble (FR)**
- **Nguyen, Duy Thong**
  **38600 Fontaine (FR)**

- **Simoens, François**
  **38640 Claix (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A1- 1 431 731**     **EP-A1- 2 246 677**

- **DUY-THONG NGUYEN ET AL: "Simulations and measurements of the electromagnetic response of broadband THz uncooled antenna-coupled microbolometer array", 2012 19TH INTERNATIONAL CONFERENCE ON MICROWAVES, RADAR & WIRELESS COMMUNICATIONS, 1 mai 2012 (2012-05-01), pages 116-121, XP055064889, DOI: 10.1109/MIKON.2012.6233506 ISBN: 978-1-45-771437-5**

## Description

## DOMAINE DE L'INVENTION

La présente invention a trait au domaine des détecteurs bolométriques à antenne destinés à la détection d'un rayonnement électromagnétique dans le domaine du térahertz.

Pour la détection dans la gamme térahertz, c'est-à-dire dans la gamme de fréquences comprise entre 100 gigahertz environ et 10 térahertz environ, les applications de l'invention, envisagées de façon non limitative, concernent :

■ le diagnostic médical, pour lequel la détection dans le domaine du térahertz autorise l'accès à des détails de structure anatomique et les réactions chimiques qui s'y produisent, que ne fournissent ni les rayons X ni les ultra-sons ;
■ le domaine militaire et la sécurité aérienne, avec par exemple la réalisation de radars anti-furtivité ou de radars haute résolution permettant de faire de la discrimination ;
■ l'étude et la détection de la pollution atmosphérique, l'observation en ondes submillimétriques fournissant en effet des informations importantes sur la chimie atmosphérique et permettant ainsi un suivi inégalé des polluants atmosphériques, comme par exemple le trioxyde d'azote qui est difficilement détectable par les techniques classiques car présentant de fortes raies d'absorption dans l'infrarouge lointain ;
■ l'identification d'espèces chimiques, de nombreux composés chimiques complexes ayant une signature dans la gamme terahertz suffisamment univoque pour permettre leur détection de manière certaine, comme par exemple certains explosifs et produits toxiques, certains composés issus de la maturation des fruits ou encore certains composés issus de la combustion industrielle ;
■ l'analyse de phénomènes moléculaires ou atomiques, la spectroscopie térahertz permettant d'obtenir de nouvelles informations sur des mécanismes comme la photo-excitation, la photo-dissociation et la solvatation. Il en va de même pour l'analyse d'interactions moléculaires (états vibratoires des molécules ou des liaisons hydrogène par exemple), de systèmes à phase condensée, de processus dynamiques dans des grosses molécules telles que les peptides et les protéines, ou encore l'observation de l'orientation des polymères avec une technique basée sur le rayonnement térahertz ;
■ l'étude des propriétés des matériaux, comme les semi-conducteurs, pour déterminer de manière non destructive par exemple leur mobilité, la dynamique de porteurs ultra-rapides et les interactions porteurs-phonons, les supraconducteurs, les polymères, les céramiques, les matériaux organiques et les matériaux poreux. De plus, dans la gamme térahertz, des matériaux tels que les plastiques, le papier et les textiles sont transparents, les métaux sont de parfaits réflecteurs et l'eau possède un grand pouvoir absorbant. Ainsi, la détection dans cette gamme est particulièrement adaptée à l'inspection de produits emballés ou au contrôle de procédés de fabrication in situ et en temps réel par exemple ; et
) ■ la télécommunication large bande, la course à des débits d'information toujours plus élevés, autant sur terre qu'entres satellites, poussant les industriels à développer des systèmes fonctionnant à des fréquences qui atteignent aujourd'hui plusieurs centaines de gigahertz et demain plusieurs térahertz.

## ETAT DE LA TECHNIQUE

Les documents EP2246677, EP1431731 et Nguyen et al "Simulations and measurements of the electromagnetic response of broadband THz uncooled antenna-coupled microbolometer array", 2012 19th International Conference on Microwaves, Radar & Wireless Communications, 1 Mai 2012, pages 116-121 divulguent des détecteurs bolométriques.

Usuellement, un détecteur bolométrique résistif mesure la puissance d'un rayonnement incident dans la gamme infrarouge. Il comprend à cet effet un élément bolométrique résistif absorbant qui convertit le flux lumineux en flux calorifique, ce qui produit une ) élévation de température dudit élément par rapport à une température de référence. Cette augmentation de température induit alors une variation de la résistance électrique de l'élément absorbant, provoquant des variations de tension ou de courant aux bornes de celui-ci. Ces variations électriques constituent le signal délivré par le capteur.

Toutefois, la température de l'élément bolométrique est usuellement dépendante en grande partie de l'environnement de celui-ci, et notamment celle du substrat qui comprend le circuit électronique de lecture. Afin d'insensibiliser au maximum l'élément absorbant de son environnement, et ainsi augmenter la sensibilité du détecteur, l'élément bolométrique est généralement isolé thermiquement du substrat.

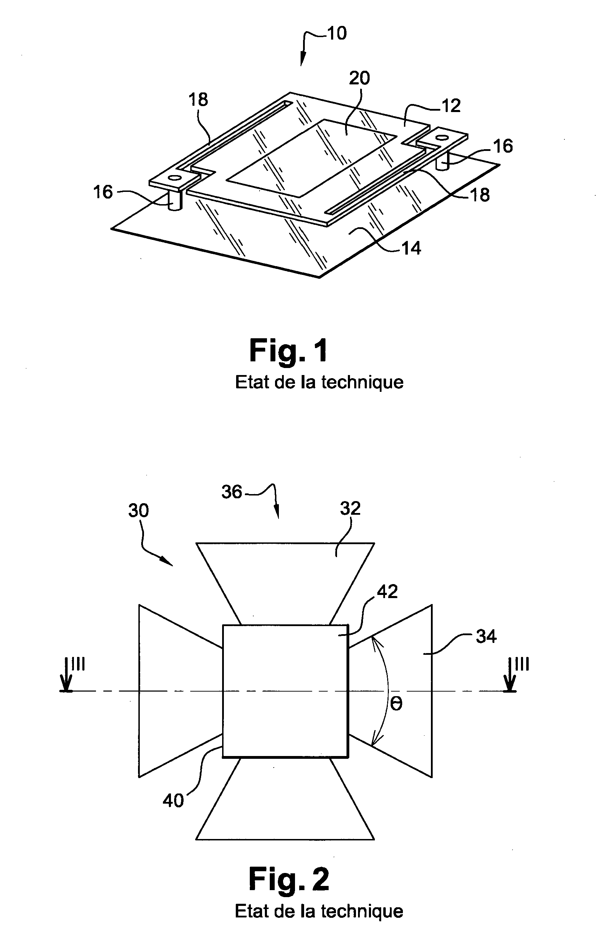

La figure 1 est une vue schématique en perspective d'un détecteur bolométrique résistif élémentaire 10 de l'état de la technique pour la détection infrarouge illustrant ce principe d'isolation thermique. Ce détecteur élémentaire, usuellement désigné par le terme de « bolomètre », ici sous la forme d'une membrane suspendue, fait classiquement partie d'une matrice de détecteurs élémentaires à une ou deux dimensions.

Le bolomètre 10 comporte une fine membrane 12 absorbant le rayonnement incident, suspendue au-dessus d'un substrat - support 14 par l'intermédiaire de deux clous d'ancrage conducteurs 16 auxquels elle est fixée par deux bras d'isolation thermique 18. La membrane 12 comprend usuellement une couche d'isolant électrique, comme par exemple du $SiO_2$, du SiO, du SiN, du ZnS ou autre, qui assure la rigidité mécanique de la membrane **12,** ainsi qu'une couche métallique d'interconnexion électrique déposée sur la couche d'isolant.

Une couche mince **20** de matériau thermométrique résistif est par ailleurs déposée au centre de la membrane **12** sur la couche métallique d'interconnexion, notamment une couche en un matériau semi-conducteur, tel que du silicium polycristallin ou amorphe de type p ou n faiblement ou fortement résistif, ou bien un oxyde de vanadium ($V_2O_5$, $VO_2$) élaboré dans une phase semi-conductrice.

Enfin, le substrat - support **14** comprend un circuit électronique intégré sur une plaquette de silicium, usuellement connu sous l'expression « circuit de lecture ». Le circuit de lecture comporte d'une part les éléments de stimuli et de lecture de l'élément thermométrique **20,** et d'autre part les composants de multiplexage qui permettent de sérialiser les signaux issus des différents éléments thermométriques présents dans le détecteur matriciel.

En fonctionnement, la membrane **12** s'échauffe sous l'effet d'un rayonnement électromagnétique incident et la puissance calorifique produite est transmise à la couche **20** de matériau thermométrique. Périodiquement, le circuit de lecture agencé dans le substrat **14** polarise la membrane **12** en soumettant les clous **16** à une tension de polarisation et recueille le courant circulant dans l'élément thermométrique **20** pour en déduire une variation de sa résistance et donc le rayonnement incident à l'origine de ladite variation.

L'agencement et le fonctionnement d'un tel détecteur étant classique, il ne sera pas expliqué plus en détail pour des raisons de concision. Il doit cependant être noté que la membrane **12** remplit, outre la fonction d'isolation thermique, trois fonctions principales : celle d'antenne pour la réception du rayonnement, celle de conversion de la puissance électromagnétique réceptionnée en puissance calorifique, et celle de mesure thermométrique de la puissance calorifique produite. Remplissant le rôle d'antenne, les dimensions de la membrane **12** sont en conséquence sélectionnées pour être du même ordre de grandeur que la longueur d'onde du rayonnement destiné à être mesuré.

Or, dans le domaine du térahertz, les longueurs d'onde peuvent atteindre le millimètre, ce qui nécessite donc une membrane du même ordre de grandeur. Toutefois, pour de telles dimensions, la masse calorifique, la tenue mécanique et les pertes par rayonnement de la membrane sont si problématiques qu'elles nuisent in fine à l'efficacité du détecteur.

C'est pourquoi, pour une telle gamme de fréquences, la fonction de réception du rayonnement est découplée des autres fonctions. La fonction de réception est ainsi assurée par une antenne plane, et la fonction de conversion de la puissance électromagnétique en puissance calorifique est quant à elle assurée par la charge résistive de l'antenne. Les dimensions de la charge résistive satisfont classiquement aux conditions d'adaptation d'impédance qui dépendent de la géométrie de l'antenne et de la nature des couches la supportant afin d'obtenir une conversion optimale. La charge résistive est par ailleurs en contact thermique avec un élément thermométrique pour la mesure de la puissance calorifique produite. L'ensemble constitue alors un bolomètre à antenne.

Dans une telle configuration, l'élément thermométrique est indépendant de l'antenne et sa taille ne dépend plus alors de la longueur d'onde incidente, mais de facteurs déterminant les performances intrinsèques du détecteur (sensibilité, rapport signal sur bruit, etc...), en adéquation avec les exigences de l'application visée, par exemple de l'imagerie active ou de l'imagerie passive.

Par ailleurs, dans la plupart des cas, le rayonnement électromagnétique incident n'est pas polarisé, de sorte que sa réception par une seule antenne ne permet pas de capter la totalité de la puissance électromagnétique. Toutefois, un rayonnement non polarisé peut être considéré comme la superposition de deux composantes polarisées linéairement dans deux directions orthogonales, chacune de ces composantes transportant la moitié de l'énergie de l'onde. Comme cela est connu en soi, une manière efficace de capter un rayonnement électromagnétique incident est d'utiliser deux antennes papillons croisées. L'antenne papillon est mieux connue sous l'expression anglo-saxonne « *bowtie* », et est explicitée par exemple dans la thèse de R. PEREZ, « Contribution à l'analyse théorique et expérimentale de radargrammes GPR : performances des antennes : apports d'une configuration multistatique », Thèse de doctorat, Université de Limoges, 2005, consultable sur le site suivant : http://www.unilim.fr/theses/2005/sciences/2005limo0053/perez_r.pdf.

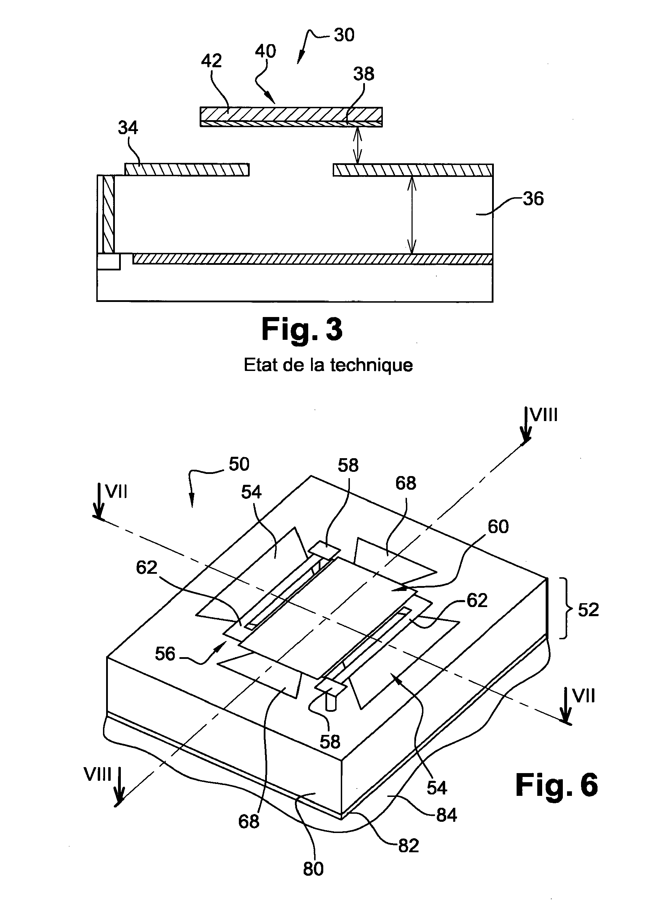

Le document US 6 329 655 décrit un bolomètre à antenne **30,** fonctionnant dans la gamme millimétrique et muni de deux antennes papillons croisées **32, 34,** dont des vues schématiques de dessus et en section sont représentées aux figures 2 et 3 respectivement. Le principe du bolomètre **30** repose sur le couplage capacitif réalisé entre les antennes **32, 34,** disposées sur un substrat - support **36,** et une charge résistive **38,** agencée dans une membrane suspendue **40** et sur laquelle est disposée un élément thermométrique **42** (figure 3).

La charge résistive **38,** qui prend la forme d'une couche carrée agencée au centre des antennes **32, 34,** présente en effet une surface en regard de celles-ci et forme donc avec les antennes une capacité. Le rayonnement capté par les antennes **32, 34** est ainsi transmis à la charge **38** par couplage capacitif.

Sous l'effet du rayonnement transmis, la charge **38** s'échauffe et transmet la chaleur ainsi produite à l'élément thermométrique **42,** qui a son tour s'échauffe et voit sa résistance électrique modifiée.

Si le fait de suspendre l'élément thermométrique au-dessus du substrat permet à celui-ci de subir une variation de résistance électrique sous l'effet du rayonnement incident, cette variation reste cependant infime.

En effet, dans le cadre du détecteur bolométrique élémentaire de la figure 1, à 300°K, une variation de 1 K de la scène observée induit une variation relative de la résistance électrique de la couche thermométrique **20** d'environ 0,04%. En effet, l'essentiel de la valeur de la résistance électrique de cet élément est principalement dicté par l'environnement direct de la membrane. Notamment, le substrat influence la température de la membrane **12** via la conduction thermique au travers des clous **16** et des bras **18** qui fixent environ 70% de la valeur de la résistance électrique de la couche **20**. En outre, les éléments entourant la membrane, comme le substrat et le boitier du détecteur, émettent également un rayonnement thermique, qui fixe environ 20% de la valeur de la résistance électrique de la couche **20** pour une température ambiante de 300°K. Dans le meilleur des cas, moins de 10 % de la valeur de la résistance électrique sont fixés par le rayonnement incident, et plus généralement moins de 1%. L'essentiel de la résistance électrique de la couche de matériau thermométrique **20** étant fixé par des éléments étrangers à la scène observée, en l'absence de mesure particulière, la dynamique de lecture du détecteur est donc très limitée, ce qui rend un tel détecteur très difficile d'utilisation.

Pour pallier ce problème, le détecteur bolométrique élémentaire est associé à une structure de compensation, ou « d'ébasage », visant à éliminer la part non utile du signal issu de la lecture de l'élément thermométrique de la membrane.

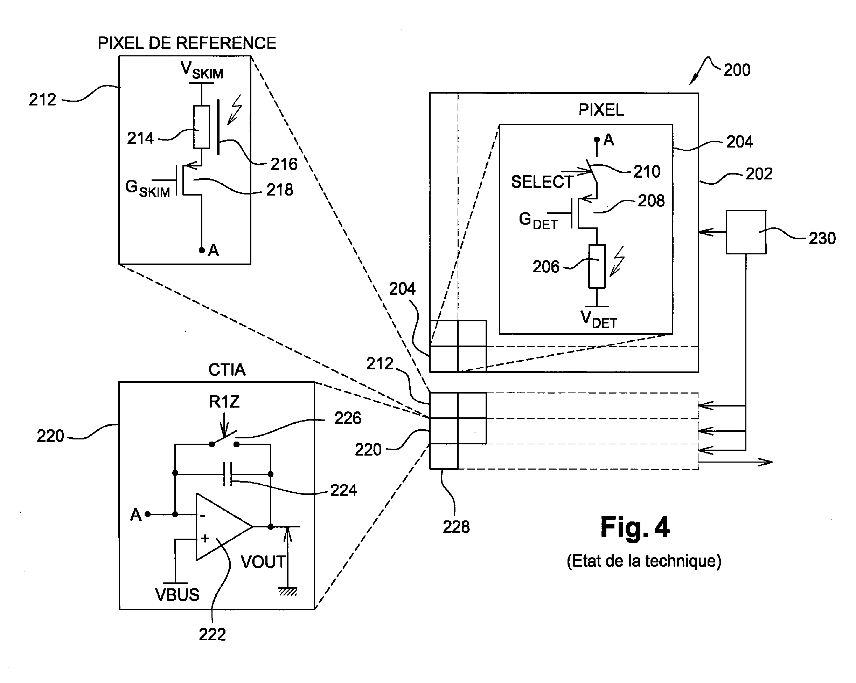

La figure 4 est un schéma électrique d'un détecteur bolométrique **200** infrarouge de l'état de la technique comprenant une telle structure d'ébasage. Le détecteur **200** comprend une matrice bidimensionnelle **202** d'éléments unitaires de détection **204,** ou « pixels », comprenant chacun un bolomètre sensible **206** sous la forme d'une membrane suspendue au-dessus d'un substrat, par exemple le bolomètre illustré à la figure 1, connecté à l'une de ses bornes à une tension constante « $V_{DET}$ » et à l'autre de ses bornes à un transistor MOS de polarisation **208** réglant la tension aux bornes du bolomètre **206** au moyen d'une tension de commande de grille « $G_{DET}$ ». Le pixel **204** comprend également un interrupteur de sélection **210,** connecté entre le transistor MOS **208** et un noeud « A » prévu pour chaque colonne de la matrice **202,** et piloté par un signal de commande « SELECT », permettant la sélection du bolomètre **206** pour sa lecture. L'ensemble bidimensionnel de membranes suspendues, usuellement désigné sous le terme de « rétine », est placé dans un boitier hermétique au droit d'une fenêtre transparente au rayonnement infrarouge à détecter et dans le plan focal d'une optique (non représentée). Le transistor **208** et l'interrupteur **210** sont quant à eux usuellement formés dans le substrat sous l'emprise de la membrane du bolomètre **206.**

Le détecteur **200** comporte également, en pied de chaque colonne de la matrice **202,** une structure d'ébasage **212** comportant un bolomètre de référence **214** identique aux bolomètres **206** des pixels **204** du point de vue électro-thermique et rendu insensible au rayonnement incident issu de la scène à observer. Le bolomètre de référence **214** comporte par exemple une membrane suspendue identique à celle des bolomètres sensibles **206** de la matrice **202** rendue insensible au rayonnement à détecter au moyen d'un écran **216,** auquel cas la résistance électrique de l'élément thermométrique du bolomètre de référence **214** diffère de celle des bolomètres sensibles **206** par la variation de résistance électrique que ces derniers subissent en raison du rayonnement incident. Ce type de structure, optimale du point de vue du mode commun, est cependant difficile et onéreuse à fabriquer. En variante, le bolomètre **214** comporte un empilement identique à l'empilement constitutif de la partie suspendue de la membrane des bolomètres **206,** et donc la membrane suspendue des bolomètres **206** sans le système d'isolation thermique comportant essentiellement les bras **18** d'isolation thermique, formé directement sur et/ou dans le substrat. Dans ce cas la résistance électrique du bolomètre **214** est essentiellement dictée par la température du substrat, le bolomètre **214** étant dit « thermalisé » au substrat. Le bolomètre **214** est connecté à l'une de ses bornes à une tension constante « $V_{SKIM}$ », et la structure d'ébasage **212** comporte en outre un transistor MOS de polarisation **218** réglant la tension aux bornes du bolomètre **214** au moyen d'une tension de commande de grille « $G_{SKIM}$ » et connecté entre l'autre borne du bolomètre **214** et le noeud « A ».

Le détecteur **200** comporte également, en pied de chaque colonne de la matrice **202** un intégrateur **220** de type CTIA (pour « *capacitive transimpedance amplifier* ») comportant par exemple un amplificateur **222** et une capacité **224** connectée entre l'entrée inverseuse et la sortie de l'amplificateur **222**. La borne inverseuse et la borne non-inverseuse de ce dernier sont par ailleurs connectées respectivement au noeud « A » et à une tension constante « VBUS ». Un interrupteur **226,** piloté par un signal « RAZ », est également prévu en parallèle de la capacité **224,** pour la décharge de celui-ci. Les sorties des CTIA **220** sont enfin par exemple connectées à des échantillonneurs bloqueurs **228** respectifs pour la délivrance des tensions « Vout » des CTIA en mode multiplexé.

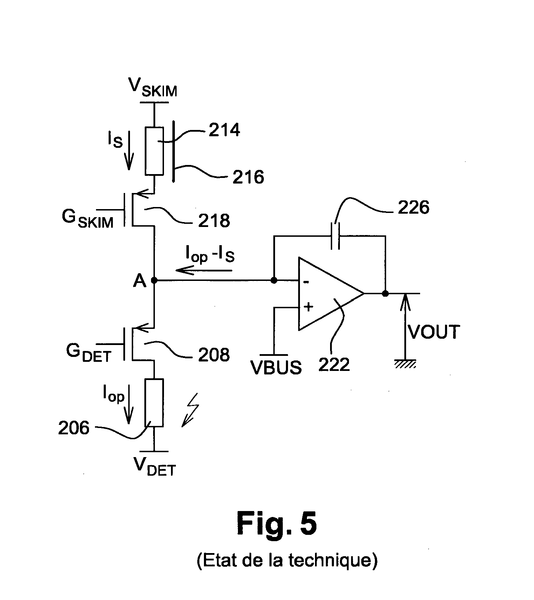

Le détecteur **200** comprend enfin une unité de gestion **230** commandant les différents interrupteurs décrits précédemment. En fonctionnement, la matrice **202** est lue ligne par ligne. Pour lire une ligne de la matrice **202,** les interrupteurs **210** de la ligne de pixels **204** sont fermés et les interrupteurs **210** des autres lignes sont ouverts. Après une phase de décharge des condensateurs des CTIA en pied de colonne, réalisée par la fermeture des interrupteurs **226** suivi de leur ouverture, il est ainsi obtenu un circuit tel que représenté sur la figure 5 pour chaque pixel de la ligne en cours de lecture. Un courant « Iop » circule dans le bolomètre **206** du pixel sous l'effet de sa polarisation en tension par le transistor MOS **208,** et un courant « Is » circule dans le bolomètre **216** de la structure d'ébasage sous l'effet de sa polarisation en tension par le transistor MOS **218.** La différence de courant résultante est intégrée par le CTIA **220** pendant une durée d'intégration prédéterminée « Tint ». La tension de sortie « Vout » du CTIA **220** représente ainsi une mesure de la variation de la résistance du bolomètre **206** provoquée par le rayonnement incident à détecter, puisque la partie non utile du courant « Iop » est compensée, au moins en partie, par le courant « Is » spécifiquement produit pour reproduire cette partie non utile.

Si la structure d'ébasage venant d'être décrite permet d'obtenir des résultats satisfaisants dans le cadre de la détection infrarouge, son application à la détection terahertz n'est pas satisfaisante.

Comme précédemment décrit, les bolomètres de référence des structures d'ébasage des détecteurs infrarouge de l'état de la technique sont nécessairement insensibilisés au rayonnement infrarouge issu de la scène. Il s'agit en effet de ne reproduire que la partie non utile des courants circulants dans les bolomètres sensibles et donc ne pas compenser la partie utile desdits courants qui correspondent dans cette application au rayonnement infrarouge objet de la détection.

Toutefois, dans le cadre d'une détection terahertz, le rayonnement infrarouge devient un élément perturbateur d'influence non négligeable en raison de sa forte intensité, le rayonnement infrarouge étant le plus souvent d'intensité supérieure de plusieurs ordres de grandeur à l'intensité du rayonnement terahertz. Il est donc nécessaire de « traiter » le rayonnement infrarouge pour détecter le rayonnement terahertz.

Cependant, si on prévoit une structure d'ébasage dans un détecteur térahertz analogue à celle d'un détecteur infrarouge, c'est-à-dire insensibilisé au rayonnement issu de la scène, la structure d'ébasage est également insensibilisée au rayonnement infrarouge, de sorte qu'elle ne reproduit pas la partie non utile correspondant à ce rayonnement. N'étant pas reproduite, cette partie non utile n'est donc pas compensée dans le courant circulant dans les bolomètres sensibles. Or, comme précédemment décrit, le rayonnement infrarouge étant de plusieurs ordres supérieur au rayonnement térahertz, la portion utile du courant des bolomètres sensibles correspondant à ce dernier se retrouve donc « noyée » dans la partie non utile du courant correspondant au rayonnement infrarouge. Le détecteur ainsi obtenu est donc au final très peu sensible au rayonnement térahertz.

Par ailleurs, il ne peut être envisagé de structure d'ébasage qui ne soit pas insensibilisée au rayonnement issu de la scène puisqu'une telle structure reproduirait la portion utile correspondant au rayonnement térahertz, portion utile qui serait compensée dans le courant des bolomètres sensibles.

## EXPOSE DE L'INVENTION

Le but de la présente invention est de fournir, dans un détecteur bolométrique térahertz, un circuit qui compense efficacement la partie non utile des signaux produits par des bolomètres sensibles du détecteur, y compris la partie non utile de ces signaux correspondant au rayonnement infrarouge issu de la scène observée.

A cet effet l'invention a pour objet un dispositif de détection d'un rayonnement électromagnétique dans le domaine térahertz, comprenant au moins un détecteur bolométrique élémentaire comportant :

■ au moins une antenne pour collecter le rayonnement électromagnétique térahertz ;
■ un micropont suspendu au-dessus d'un substrat par des bras de soutien et d'isolation thermique conducteurs de l'électricité, le micropont comprenant :

o une charge résistive couplée à l'antenne pour convertir la puissance électromagnétique collectée par celle-ci en puissance calorifique ; et
o un élément bolométrique résistif couplé à la charge résistive pour s'échauffer sous l'effet de la puissance calorifique produite par celle-ci;

■ et un circuit de polarisation connecté électriquement à l'élément bolométrique au travers des bras de soutien et d'isolation thermique pour polariser électriquement celui-ci et produire un signal électrique dépendant de la résistance électrique dudit élément.

Selon l'invention, le dispositif de détection comprend en outre :

■ un circuit d'ébasage comprenant:

o un micropont suspendu au-dessus du substrat par des bras de soutien et d'isolation thermique conducteurs de l'électricité, et comprenant un élément bolométrique résistif, le micropont du circuit d'ébasage étant sensiblement identique au micropont du détecteur bolométrique élémentaire en termes de résistance électrique, de constante de temps thermique et de détection infrarouge ;
o une couche réflectrice métallique formée sur le substrat en regard du micropont, la distance séparant le micropont de la couche réflectrice étant choisie de manière à obtenir une interférence destructrice au niveau du micropont pour une longueur d'onde du rayonnement térahertz ; et
o un circuit de polarisation connecté électriquement au micropont du circuit d'ébasage pour polariser électriquement celui-ci et produire un signal électrique dépendant de la résistance électrique dudit élément; et

■ et un circuit de lecture apte à être couplé au détecteur élémentaire et au circuit d'ébasage pour mesurer une différence entre les signaux électriques produits par ceux-ci.

En d'autres termes, le détecteur térahertz selon l'invention comporte une structure d'ébasage associée à chaque détecteur bolométrique élémentaire et comportant un bolomètre de référence sous la forme de micropont conçu pour subir au moins l'influence thermique du substrat dans les mêmes proportion que le bolomètre sensible du détecteur élémentaire, et pour restituer cette influence sous la forme d'un signal de mode commun soustrait du signal produit par le détecteur bolométrique élémentaire, par exemple un courant de mode commun dans le cadre d'une polarisation en tension.

Ensuite, le bolomètre de référence est conçu pour être sensible au rayonnement infrarouge incident afin de reproduire la portion non utile correspondant audit rayonnement. Par exemple, le bolomètre de référence comporte un micropont dont la partie suspendue est identique à celle du micropont du détecteur bolométrique élémentaire et le bolomètre de référence ne comporte aucun écran bloquant le rayonnement incident.

En revanche, le bolomètre de référence est rendu insensible au rayonnement térahertz objet de la détection en réalisant une frange d'interférence destructive centrée sur le micropont ou au voisinage de celui-ci pour le rayonnement térahertz. On sait en effet que la réflexion sur une couche métallique induit un déphasage de -180° entre le rayonnement incident et le rayonnement réfléchi, et donc la production de franges d'interférence. En choisissant la distance appropriée entre le micropont et la couche réflectrice pour placer le micropont dans une frange destructrice, l'absorption du rayonnement térahertz par le micropont du bolomètre de référence est donc sensiblement minimisée. Le rayonnement térahertz objet de la détection n'étant pas, ou très peu, absorbé par le bolomètre de référence, la portion utile du signal produit par le détecteur élémentaire reste donc sensiblement inchangée après soustraction du signal issu de la structure d'ébasage, contrairement à la portion non utile correspondant au rayonnement infrarouge.

Selon un mode de réalisation, le circuit d'ébasage est agencé de manière à ce que le micropont correspondant reçoit au moins une partie du rayonnement incident sur le micropont du détecteur bolométrique élémentaire.

Selon un mode de réalisation, le micropont du circuit d'ébasage a une structure identique à celle du micropont du détecteur bolométrique élémentaire, ce qui permet de produire un signal de mode commun le plus proche possible de celui du bolomètre sensible.

Selon un mode de réalisation, le micropont du circuit d'ébasage a une structure qui diffère de celle du micropont du détecteur bolométrique élémentaire uniquement en ce que le micropont du circuit d'ébasage ne comporte pas de charge résistive. En variante, le micropont du circuit d'ébasage a une structure qui diffère de celle du micropont du détecteur bolométrique élémentaire uniquement en ce que le micropont du circuit d'ébasage comporte une charge résistive montée en court-circuit.

Si l'absence ou le court-circuitage des charges résistives modifient les propriétés électro-thermiques du bolomètre de référence par rapport à celle du bolomètre sensible, ces modifications sont cependant usuellement inférieures aux dispersions des propriétés électro-thermiques induites par les incertitudes de la technologie de fabrication. En revanche, l'absence ou le court-circuitage de charge résistive permet de rejeter d'éventuelles résonances résultant d'un comportement de type antenne plaquée, ou antenne « patch ». Une structure patch est par exemple formée par l'espacement vide entre la surface métallique des antennes et le plan réflecteur. Cette structure possède ses propres modes de résonances à des fréquences situées en dehors de la plage de détection du bolomètre. Cependant les courants induits par ces résonances sont susceptibles de dissiper de l'énergie dans les charges résistives des antennes participant ainsi à l'échauffement du pont bolométrique. Ces phénomènes d'absorption propres au bolomètre d'ébasage peuvent ainsi dégrader sa fonction de référence. Il est donc avantageux de se prémunir de ces effets en supprimant ou en court-circuitant ces charges.

Selon un mode de réalisation, la distance séparant le micropont du circuit d'ébasage de la couche réflectrice est inférieure à un dixième de la longueur d'onde du rayonnement térahertz. De cette manière, le micropont est agencé dans la première frange d'interférences destructrices

Par exemple, le bolomètre sensible au rayonnement térahertz est celui décrit en relation avec les figures 2 et 3 et la structure d'ébasage comporte un micropont identique à la membrane **40** suspendue au-dessus d'une couche métallique déposée sur le substrat **36** à une distance inférieure à 10 micromètres et sans protection particulière contre le rayonnement incident.

Selon un mode de réalisation, le détecteur bolométrique élémentaire comporte une première et une seconde antennes papillon croisées, destinées à collecter le rayonnement électromagnétique,

- la première antenne est agencée hors du micropont et est en couplage capacitif avec la charge résistive, et
- la seconde antenne est agencée dans le micropont en couplage résistif avec la charge résistive.

De cette manière, les antennes sont séparées l'une de l'autre par le vide entre le micropont et le substrat, de sorte qu'il existe un couplage réduit entre elles, notamment via un matériau.

Afin d'obtenir des propriétés électro-thermiques le plus proche possible de celles du bolomètre sensible, le bolomètre de référence comprend donc un micropont qui comprend la seconde antenne, et donc une antenne sensible au rayonnement térahertz. Le fait de placer le micropont, et donc la seconde antenne, dans une frange d'interférences destructrices permet ainsi de « neutraliser » efficacement la détection térahertz de ladite antenne.

Avantageusement, la charge résistive du micropont du détecteur bolométrique élémentaire comporte un film métallique, et le micropont du détecteur bolométrique élémentaire comporte des ailettes agencées en regard de la première antenne sur le film métallique de façon à être en couplage capacitif avec celle-ci et ainsi à réaliser une adaptation d'impédance entre la première antenne et le film métallique. De préférence, les ailettes adoptent une forme analogue aux parties centrales de la première antenne. Notamment, les ailettes sont recouvertes d'un isolant électrique et l'élément bolométrique est au moins partiellement agencé sur ledit isolant et au moins partiellement au contact du film métallique. En d'autres termes, les ailettes sont conçues en dimension, forme et matériau pour réaliser une adaptation d'impédance, optimale avec la première antenne, et cela indépendamment de la seconde antenne. Il est à noter que l'interférence destructrice réalisée au niveau du micropont permet de « neutraliser » en outre la détection térahertz éventuellement effectuée par les ailettes.

Avantageusement, la charge résistive du micropont du détecteur bolométrique élémentaire comporte un film métallique, et la seconde antenne est agencée au moins partiellement sur ce film métallique. En d'autres termes, le film résistif remplit ici la fonction de conversion pour la puissance électromagnétique reçue par la seconde antenne, et cela indépendamment des ailettes et de la première antenne.

Avantageusement, la première antenne est agencée sur le substrat.

Avantageusement, le dispositif comporte une matrice à une ou deux dimensions de détecteurs bolométriques élémentaires, et un circuit d'ébasage associé à chaque colonne de ladite matrice.

Avantageusement, la couche réflectrice métallique présente une surface supérieure ou égale à la surface projetée du micropont du circuit d'ébasage.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

    ■ la figure 1 est une vue schématique en perspective d'un détecteur bolométrique élémentaire de l'état de la technique, déjà décrit ci-dessus;
    ■ les figures 2 et 3 sont des vues schématiques de dessus et en coupe d'un détecteur bolométrique à antennes selon l'état de la technique, déjà décrit ci-dessus ;

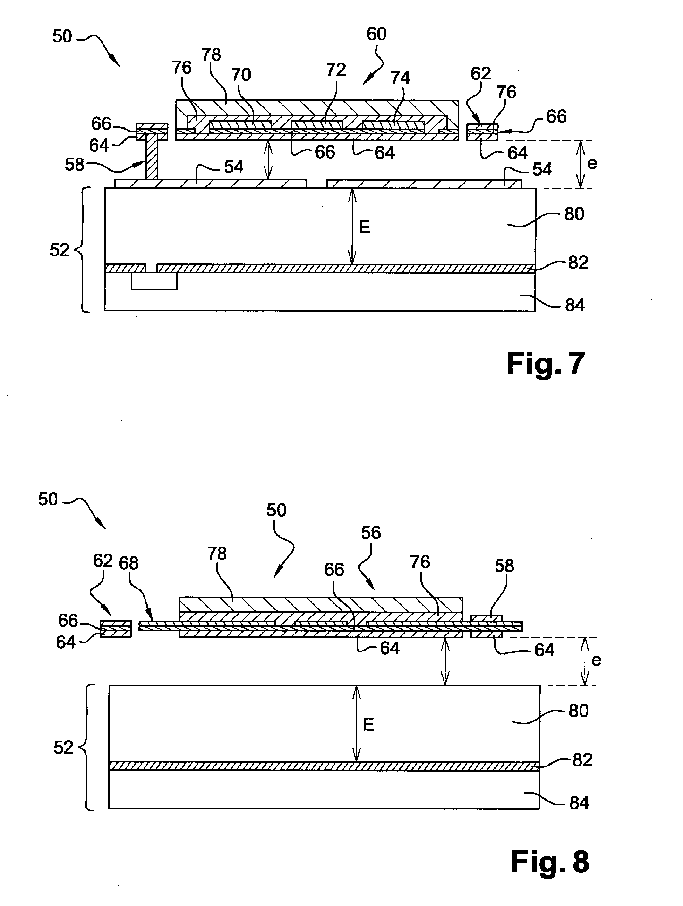

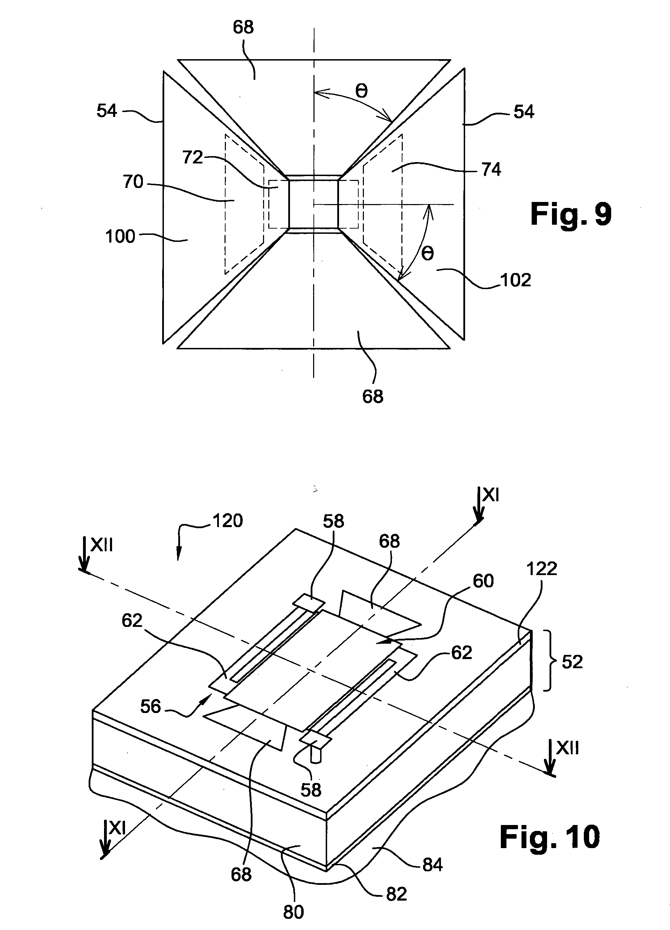

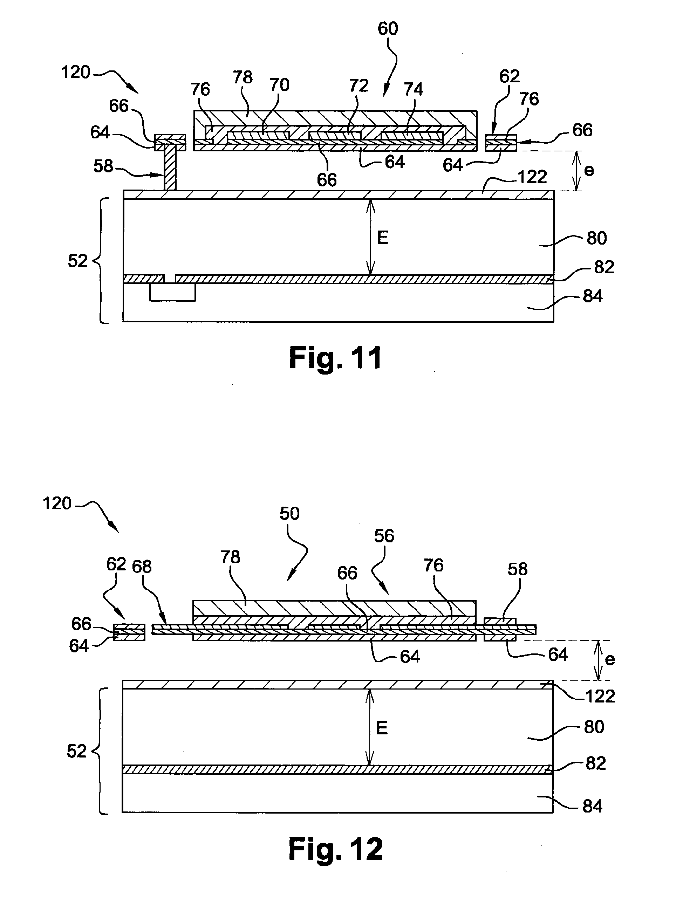

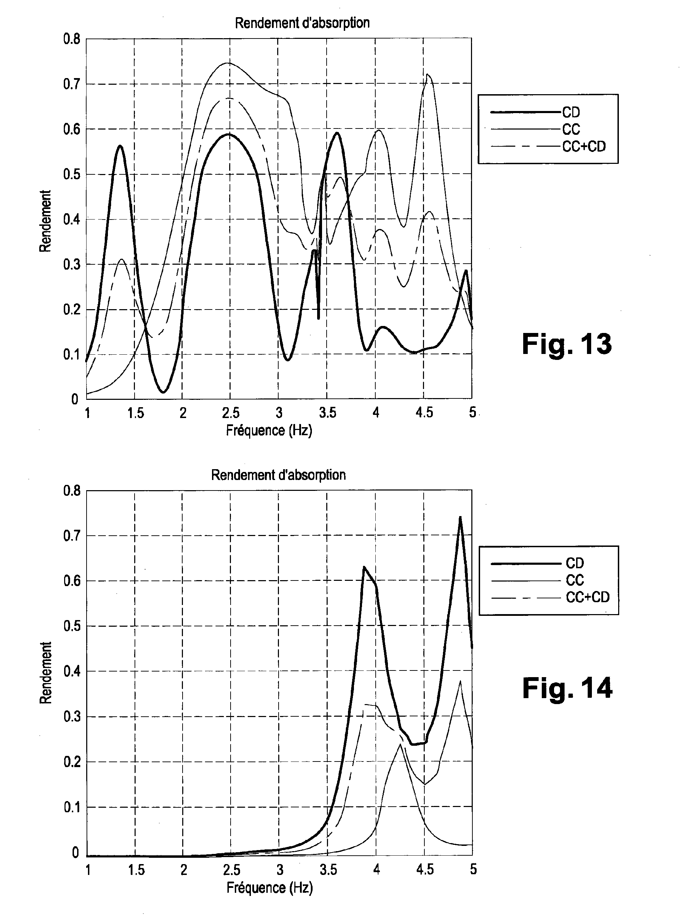

    ■ la figure 4 est un schéma électrique d'un détecteur bolométrique infrarouge de l'état de la technique, déjà décrit ci-dessus ;
    ■ la figure 5 est un schéma électrique illustrant la lecture d'un bolomètre sensible du détecteur de la figure 4 à l'aide d'une structure d'ébasage ;
    ■ la figure 6 est une vue schématique en perspective d'un bolomètre térahertz sensible entrant dans la constitution d'un détecteur selon l'invention ;
    ■ les figures 7 et 8 sont des vues en section du bolomètre sensible de la figure 6, respectivement selon les plans VII-VII et VIII-VIII de la figure 6 ;
    ■ la figure 9 est une vue schématique de dessus illustrant les ailettes d'adaptation d'impédance entrant dans la constitution du bolomètre sensible de la figure 6 ;
    ■ la figure 10 est une vue schématique en perspective d'un bolomètre de référence entrant dans la constitution d'une structure d'ébasage selon l'invention ;
    ■ les figures 11 et 12 sont des vues en section du bolomètre de référence de la figure 10, respectivement selon les plans XI-XI et XII-XII de la figure 10 ; et
    ■ les figures 13 et 14 sont respectivement des tracés du rendement d'absorption du bolomètre sensible des figures 6 à 8 et du bolomètre de référence des figures 10 à 12.

## DESCRIPTION DETAILLEE DE L'INVENTION

Il va à présent être décrit un détecteur bolométrique térahertz selon l'invention. Un tel détecteur est destiné à détecter un rayonnement térahertz dans la gamme de fréquences comprise entre 100 gigahertz et 10 térahertz et issu d'une scène observée.

Le détecteur selon l'invention comprend une matrice de bolomètres sensibles détectant le rayonnement incident et des structures d'ébasage compensant une partie non utile des signaux produits par les bolomètres sensibles. Par exemple, le détecteur selon l'invention présente une architecture électrique identique à celle décrite en relation avec les figures 4 et 5, le détecteur selon l'invention étant différent du détecteur bolométrique infrarouge 200 aux figures 4 et 5 par la structure des bolomètres sensibles et la structure des bolomètres de référence.

Notamment, le détecteur bolométrique térahertz selon l'invention comporte des bolomètres sensibles conçus pour détecter le rayonnement térahertz tels qu'illustrés aux figures 6 à 8.

A la figure 6, un bolomètre sensible dans la gamme térahertz 50 comporte un substrat isolant 52 sur lequel est déposée une première antenne papillon 54 plane, réalisée en matériau conducteur, ainsi qu'un micropont 56, suspendu au-dessus du substrat 52 par deux clous d'ancrage conducteurs 58.

Le micropont 56 est formé d'une partie centrale 60 et de deux bras d'isolation thermique 62 raccordant la partie centrale **60** aux clous d'ancrage **58** et perpendiculaires à l'axe principal (V-V) de la première antenne **54.**

Le micropont **56** comporte une première couche d'isolant électrique **64,** ainsi qu'une couche conductrice **66** déposée sur la couche d'isolant **64,** et plus particulièrement un film métallique, par exemple constitué de Ti, de TiN, de Pt, de NiCr ou autres. La couche d'isolant **64** et le film mince **66** ont chacune une épaisseur comprise entre 0,005 et 0,05 micromètres. De préférence, la résistance par carré du film métallique **66** est comprise entre 100 Ω/carré et 500 Ω/carré et est choisie de manière à ce que les bras **62** présentent des résistances électrique et thermique optimales.

Une seconde antenne papillon **68** réalisée en matériau conducteur, croisée avec la première antenne **54** et d'axe principal (VI-VI) parallèle aux bras d'isolation thermique **62,** est par ailleurs formée sur la couche conductrice **66** du micropont **56,** et s'étend de part et d'autre de la partie centrale **60.** La seconde antenne papillon **68** est ainsi en couplage résistif avec la couche conductrice **66.** Les antennes **54** et **68** sont constituées d'un matériau conducteur comme l'aluminium, le siliciure de tungstène, le titane ou autre, d'une épaisseur par exemple comprise entre 0,1 à 0,5 micromètre.

Des ailettes **70, 72, 74,** réalisées dans le même matériau que les antennes **54, 68** et d'une épaisseur comprise entre 0,1 à 0,5 micromètre, sont également prévues sur la couche conductrice **66** avec des surfaces en regard de la première antenne papillon **54.** Les ailettes **70, 72, 74** sont ainsi en couplage capacitif avec l'antenne **54,** et sont par ailleurs choisies pour réaliser une adaptation d'impédance avec celle-ci d'une manière qui sera expliquée plus en détail par la suite.

Plus particulièrement, la distance _e_ séparant les antennes **54** et le micropont **56** est comprise entre 0,5 et 5 micromètres, et préférentiellement égale à 2 micromètres pour des raisons de tenue mécanique. La distance _e_ est choisie pour réaliser un couplage capacitif performant entre la première antenne **54** déposée sur le substrat **52** et les ailettes **70, 72, 74.** Cette épaisseur est choisie préférentiellement la plus faible possible tout en étant compatible avec la tenue mécanique du micropont **56** de manière à assurer l'isolation thermique.

Les ailettes **70, 72, 74,** ainsi que la portion de la seconde antenne papillon **68** agencée dans la partie centrale **60,** sont recouvertes d'une couche d'isolant **76** pour les isoler électriquement, une partie de la couche conductrice **66** étant laissée libre. La couche **76** est par exemple constituée d'une couche de SiN, de SiO, de ZnS ou autre, d'une épaisseur comprise entre 0,005 et 0,1 micromètre.

Une couche de matériau thermométrique **78** est par ailleurs déposée sur la couche d'isolant **76** en contact de la couche conductrice **66** au niveau de la partie de celle-ci laissée libre par la couche d'isolant **76.** Le matériau constitutif de l'élément thermométrique **78** est par exemple un semi-conducteur amorphe ou polycristallin, tel que du Si, du Ge, du SiC, du a-Si :H, du a-SiGe :H, un matériau métallique ou encore un oxyde de vanadium ou un oxyde de magnétite. Ce matériau doit présenter un coefficient en température (TCR pour « _température coefficient resistance_ ») non nul. En d'autres termes, il présente une résistance qui varie en fonction de la température.

Enfin, le substrat **52** comporte une couche isolante **80,** présentant un faible coefficient d'absorption dans la gamme de longueurs d'onde de fonctionnement du détecteur, et un réflecteur **82,** la couche **80** et le réflecteur **82** formant une cavité résonnante pour les antennes **54, 68** dans la gamme de fréquences d'intérêt. Une couche fonctionnelle **84** comprenant les circuits de lecture du détecteur est enfin prévue sous le réflecteur **82.**

La cavité **80, 82** du détecteur est formée d'un réflecteur **82,** disposé sur le circuit de lecture **84,** comme par exemple une couche d'aluminium, et d'une couche **80** de matériau isolant, présentant un coefficient d'absorption le plus faible possible dans la gamme de longueurs d'onde de fonctionnement du détecteur. Par exemple, la couche **80** est constituée de SiO, de $SiO_2$, de SiN, de $Ta_2O_5$ de $Ta_2O_5\text{-}TiO_2$, de $HfO_2$, de $SrTiO_3$, de $Ba_{1-x}Sr_xTiO_3$ ou d'un mélange de ceux-ci.

Notamment, la couche **80** a une épaisseur _E_ de 10 à 500 micromètres, réglée à la valeur :

$$E = \lambda/(4\mathrm{n})$$

où :

■ λ est une longueur d'onde de la gamme de fonctionnement du détecteur, par exemple la longueur d'onde centrale de cette gamme ; et

■ $\mathrm{n} = \sqrt{\varepsilon}$, ε étant la permittivité diélectrique du matériau constitutif de la couche **80.**

Une cavité résonnante est ainsi obtenue pour le rayonnement térahertz objet de la détection.

La couche **80** est par ailleurs traversée par des connexions électriques, par exemple dans le prolongement des clous d'ancrage **58,** de manière à relier électriquement le circuit de lecture **84** et l'élément thermométrique **78.** Par exemple, les connexions sont constituées d'un métal comme le tungstène, l'aluminium ou le cuivre.

La figure 9 illustre schématiquement en vue de dessus les première et seconde antennes papillons **54, 68,** ainsi que les ailettes **70, 72, 74.** Comme cela est visible, une première ailette centrale **72,** de forme rectangulaire, est à cheval sur les deux ailes **100, 102** de l'antenne papillon **54,** et deux ailettes latérales **70, 74** sont respectivement en regard des parties **100, 102** de la première antenne **54.** De préférence, les ailettes latérales **70, 74** sont sensiblement de forme et de dimension identiques à une partie de l'antenne **54.** Les ailettes ont une forme trapézoïdale équivalente à la partie trapézoïdale de l'antenne située en regard. Sa surface correspond avantageusement à la capacité C nécessaire à l'adaptation d'impédance. Ainsi, il est obtenu une adaptation d'impédance optimale.

En outre, la charge résistive des antennes, défini par les portions de la couche conductrice **66** situées entre les ailettes **70, 72, 74** et entre les parties de la seconde antenne **68,** est de surface réduite. Cette surface étant réduite, le couplage du détecteur selon l'invention avec le rayonnement infrarouge, qui est en première approximation proportionnel à la taille de la charge résistive, est donc également réduit.

Par ailleurs, la longueur des antennes **54, 68** et des ailettes, de même que leur angle d'ouverture θ sont choisis de manière à accroitre ou à réduire la bande passante du détecteur.

Il va à présent être décrit un bolomètre de référence d'une structure d'ébasage selon l'invention adaptée au bolomètre sensible venant d'être décrit.

Comme décrit précédemment, le bolomètre de référence a pour fonction de :

a) subir sensiblement les mêmes perturbations que le bolomètre sensible, notamment l'influence de la température des éléments environnants, en particulier le substrat, ainsi que l'influence de rayonnements incidents autres que le rayonnement à détecter, en particulier le rayonnement infrarouge,

b) de se comporter de manière sensiblement identique du point de vue thermique, ou à tout le moins très proche, du bolomètre sensible en face de ces perturbations, et

c) de restituer ces perturbations de manière sensiblement identique du point de vue électrique, ou du moins très proche, que le bolomètre sensible.

A cet effet, dans un premier mode de réalisation illustré aux figures 10 à 12, un bolomètre de référence **120** selon l'invention est identique au bolomètre sensible **50** illustré aux figures 6 à 8 à la différence que :

■ la première antenne **54** du bolomètre sensible **50** est remplacée par une couche **122** réfléchissant avec un déphasage de 180° du rayonnement incident sur le micropont **56** et traversant celui-ci, avantageusement une couche métallique, déposée sur le substrat isolant **52** sous et autour du micropont **56.** Avantageusement, la couche est constituée du même matériau que l'antenne **54** et d'une épaisseur de préférence identique à celle de l'antenne **54** du bolomètre sensible. Les dimensions de la couche métallique **122** sont choisies pour être au moins égale à la surface projetée du micropont **56;**
■ la distance *e* entre la couche métallique **122** et le micropont **56** qui place le micropont **56** du bolomètre de référence **120** dans une franche d'interférences destructrices entre le rayonnement incident sur la couche **122** et le rayonnement réfléchi avec déphasage par celle-ci pour une longueur d'onde de la gamme térahertz objet de la détection. Comme décrit précédemment, la distance *e* entre le micropont **56** du bolomètre sensible **50** et la première antenne **54** est avantageusement choisie la plus faible possible afin d'avoir un couplage capacitif optimal entre l'antenne **54** et les ailettes **70, 72, 74,** tout en permettant également une isolation thermique vis-à-vis du substrat **52.** Par exemple, la distance *e* pour le bolomètre sensible **50** est comprise entre 0,5 et 5 micromètres. Ces valeurs étant très inférieures à la longueur d'onde térahertz, qui est supérieure au dixième de millimètre, la distance *e* du bolomètre de référence **120** est avantageusement identique à la distance *e* du bolomètre sensible **50,** le micropont **56** du bolomètre de référence étant ainsi localisé dans une frange d'interférences destructrices. De cette manière le bolomètre de référence **120** diffère uniquement du bolomètre sensible **50** par la couche réflectrice **122,** et peut donc être fabriquer conjointement au bolomètre sensible **50** en utilisant les mêmes étapes de fabrication.

Les figures 13 et 14 présentent respectivement le rendement d'absorption d'un bolomètre sensible **50** actif conçu pour fonctionner de manière optimale entre 2 THz et 3 THz et le rendement d'absorption d'un bolomètre de référence **120** tel que décrit précédemment. L'acronyme « CD » désigne le couplage direct, c'est-à-dire résistif, et l'acronyme « CC » désigne le couplage capacitif. Comme on peut le constater, l'absorption du bolomètre de référence **120** ne dépasse pas 1% dans la gamme de fréquence considérée entre 2 THz et 3 THz. Le bolomètre de référence **120** est donc insensibilisé au rayonnement térahertz détecté par le bolomètre sensible **50** tout en étant sensible au rayonnement infrarouge.

Selon un second mode de réalisation, le bolomètre de référence diffère du bolomètre de référence **120** en ce que la charge résistive **66** est omise.

Selon un troisième mode de réalisation, le bolomètre de référence diffère du bolomètre de référence **120** en ce que la charge résistive est court-circuitée. L'absence ou le court-circuitage de la charge résistive **66** permet ainsi de rejeter les éventuelles résonances résultant d'un comportement de type antenne plaquée, ou antenne « patch », en dehors de la plage de fonctionnement du détecteur actif, tout en produisant des résultats sensiblement identiques en termes d'absorption infrarouge que le premier mode de réalisation.

Les modes de réalisation venant d'être décrits ont l'avantage de proposer un bolomètre de référence présentant un nombre de différences minime par rapport au bolomètre sensible, ce qui permet notamment de fabriquer ces bolomètres conjointement à l'aide des mêmes techniques de fabrication. Bien entendu, le bolomètre de référence peut différer dans des proportions plus importantes du bolomètre sensible. Par exemple, le bolomètre de référence peut avantageusement être dépourvu de cavité résonnante **80, 82**.

De même, il est toujours possible d'introduire des filtres optiques pour s'affranchir des sources de rayonnements parasites en dehors de la plage de fonctionnement du bolomètre sensible **50**.

Il a été décrit un détecteur térahertz comportant une forme particulière de bolomètres sensibles **50**. Bien entendu, l'invention s'applique également à d'autres types de bolomètres sensibles sous couvert de modifications correspondantes des bolomètres de référence à la portée de l'homme du métier.

## Revendications

**1.** Dispositif de détection (200) d'un rayonnement électromagnétique dans le domaine térahertz, comprenant au moins un détecteur bolométrique élémentaire (50, 204) comportant :

■ au moins une antenne (54, 68) pour collecter le rayonnement électromagnétique térahertz ;
■ un micropont (56) suspendu au-dessus d'un substrat (52) par des bras de soutien et d'isolation thermique conducteur de l'électricité (58, 62), le micropont comprenant :

o une charge résistive (66) couplée à l'antenne (54, 68) pour convertir la puissance électromagnétique collectée par celle-ci en puissance calorifique ; et
o un élément bolométrique résistif (78) couplé à la charge résistive (66) pour s'échauffer sous l'effet de la puissance calorifique produite par celle-ci;

■ et un circuit de polarisation (208) connecté électriquement à l'élément bolométrique (78) au travers des bras de soutien et d'isolation thermique (58, 62) pour polariser électriquement celui-ci et produire un signal électrique dépendant de la résistance électrique dudit élément,
***caractérisé* en ce qu'il** comprend en outre :
■ un circuit d'ébasage (120, 212) comprenant:

o un micropont (56) suspendu au-dessus du substrat par des bras de soutien et d'isolation thermique conducteurs de l'électricité (56, 62), et comprenant un élément bolométrique résistif, le micropont du circuit d'ébasage étant sensiblement identique au micropont du détecteur bolométrique élémentaire en termes de résistance électrique, de constante de temps thermique et de détection infrarouge ;
o une couche réflectrice métallique (122) formée sur le substrat en regard du micropont (56), la distance séparant le micropont (56) de la couche réflectrice (122) étant choisie de manière à obtenir une interférence destructrice au niveau du micropont pour une longueur d'onde du rayonnement térahertz ; et
o un circuit de polarisation (218) connecté électriquement au micropont du circuit d'ébasage (120, 212) pour polariser électriquement celui-ci et produire un signal électrique dépendant de la résistance électrique dudit élément;

■ et un circuit de lecture (220) apte à être couplé au détecteur élémentaire et au circuit d'ébasage pour mesurer une différence entre les signaux électriques produits par ceux-ci.

**2.** Dispositif de détection (200) selon la revendication 1, ***caractérisé* en ce que** le circuit d'ébasage (120, 212) est agencé de manière à ce que le micropont correspondant reçoit au moins une partie du rayonnement incident sur le micropont du détecteur bolométrique élémentaire.

**3.** Dispositif de détection (200) selon la revendication 1 ou 2, ***caractérisé* en ce que** le micropont du circuit d'ébasage (120, 212) a une structure identique à celle du micropont du détecteur bolométrique élémentaire (50, 204).

**4.** Dispositif de détection (200) selon la revendication 1 ou 2, ***caractérisé* en ce que** le micropont du circuit d'ébasage (120, 212) a une structure qui diffère de celle du micropont du détecteur bolométrique élémentaire (50, 204) uniquement **en ce que** le micropont du circuit d'ébasage ne comporte pas de charge résistive, ou **en ce qu'**il comporte une charge résistive montée en court-circuit.

**5.** Dispositif de détection (200) selon l'une quelconque des revendications précédentes, ***caractérisé* en ce que** la distance e séparant le micropont du circuit d'ébasage de la couche réflectrice est inférieure à un dixième de la longueur d'onde du rayonnement térahertz.

**6.** Dispositif de détection (200) selon l'une quelconque des revendications précédentes, ***caractérisé* en ce que** le détecteur bolométrique élémentaire comporte une première et une seconde antennes papillon croisées (54, 68), destinées à collecter le rayonnement électromagnétique, et **en ce que** la première antenne (54) est agencée hors du micropont (56) et est en couplage capacitif avec la charge résistive (66), et **en ce que** la seconde antenne (68) est agencée dans le micropont (56) en couplage résistif avec la charge résistive (66).

7.  Dispositif de détection (200) selon la revendication 6, *caractérisé* **en ce que** la charge résistive (66) du micropont du détecteur bolométrique élémentaire comporte un film métallique, et **en ce que** le micropont du détecteur bolométrique élémentaire comporte des ailettes (70, 72, 74) agencées en regard de la première antenne sur le film métallique et en couplage capacitif avec celle-ci de façon à réaliser une adaptation d'impédance entre la première antenne et le film métallique.

8.  Dispositif de détection (200) selon la revendication 7, *caractérisé* **en ce que** les ailettes (70, 72, 74) sont recouvertes d'un isolant électrique (76), l'élément thermométrique du micropont du détecteur bolométrique élémentaire étant au moins partiellement agencé sur ledit isolant et au moins partiellement au contact avec le film métallique.

9.  Dispositif de détection (200) selon la revendication 6, 7 ou 8, *caractérisé* **en ce que** la charge résistive du micropont du détecteur bolométrique élémentaire comporte un film métallique (66), et **en ce que** la seconde antenne est agencée au moins partiellement sur ce film métallique.

10. Dispositif de détection (200) selon l'une quelconque des revendications 6 à 9, *caractérisé* **en ce que** la première antenne (54) est agencée sur le substrat (52).

11. Dispositif de détection (200) selon l'une quelconque des revendications précédentes, *caractérisé* **en ce qu'**il comporte une matrice à une ou deux dimensions de détecteurs bolométriques élémentaires, et **en ce qu'**il comporte un circuit d'ébasage associé à chaque colonne de ladite matrice.

12. Dispositif de détection selon l'une quelconque des revendications précédentes, *caractérisé* **en ce que** la couche réflectrice métallique (122) présente une surface supérieure ou égale à la surface projetée du micropont du circuit d'ébasage.

**Patentansprüche**

1.  Erfassungsvorrichtung (200) für eine elektromagnetische Strahlung im Terahertzbereich, mindestens einen bolometrischen Elementardetektor (50, 204) aufweisend, Folgendes umfassend:

    ■ mindestens eine Antenne (54, 68), um die elektromagnetische Terahertzstrahlung aufzufangen;
    ■ eine Mikrobrücke (56), die über einem Substrat (52) durch elektrisch leitende Halterungs- und Wärmeisolationsarme (58, 62) aufgehängt ist, wobei die Mikrobrücke aufweist:

    o eine Widerstandslast (66), die mit der Antenne (54, 68) verbunden ist, um die durch diese aufgefangene elektromagnetische Energie in Wärmeenergie umzusetzen; und
    o ein bolometrisches Widerstandselement (78), das mit der Widerstandslast (66) verbunden ist, um sich unter der Wirkung der durch diese erzeugten Wärmeenergie zu erwärmen;

    ■ und eine Polarisationsschaltung (208), die elektrisch über die Halterungsund Wärmeisolationsarme (58, 62) an das bolometrische Element (78) angeschlossen ist, um dieses elektrisch zu polarisieren und ein elektrisches Signal zu erzeugen, das vom elektrischen Widerstand des Elements abhängt,
    **dadurch gekennzeichnet, dass** sie darüber hinaus umfasst:
    ■ eine Baselineschaltung (120, 212), Folgendes umfassend:

    o eine Mikrobrücke (56), die über einem Substrat (52) durch elektrisch leitende Halterungs- und Wärmeisolationsarme (58, 62) aufgehängt ist und ein bolometrisches Widerstandselement aufweist, wobei die Mikrobrücke der Baselineschaltung in Bezug auf elektrischen Widerstand, thermische Zeitkonstante und Infraroterfassung zur Mikrobrücke des bolometrischen Elementardetektors im Wesentlichen identisch ist;
    o eine reflektierende Metallschicht (122), die auf dem Substrat gegenüber der Mikrobrücke (56) ausgebildet ist, wobei der Abstand, der die Mikrobrücke (56) von der reflektierenden Schicht (122) trennt, so gewählt ist, dass eine destruktive Interferenz im Bereich der Mikrobrücke für eine Wellenlänge der Terahertzstrahlung erzielt wird; und
    o eine Polarisationsschaltung (218), die elektrisch an die Mikrobrücke der Baselineschaltung (120, 212) angeschlossen ist, um diese elektrisch zu polarisieren und ein elektrisches Signal zu erzeugen, das vom elektrischen Widerstand dieses Elements abhängt;

    ■ und eine Leseschaltung (220), die an den Elementardetektor und die Baselineschaltung angeschlossen werden kann, um eine Differenz zwischen den von diesen erzeugten Signalen zu messen.

2. Erfassungsvorrichtung (200) nach Anspruch 1, **dadurch gekennzeichnet, dass** die Baselineschaltung (120, 212) so angeordnet ist, dass die entsprechende Mikrobrücke zumindest einen Teil der auf die Mikrobrücke des bolometrischen Elementardetektors einfallenden Strahlung erhält.

3. Erfassungsvorrichtung (200) nach Anspruch 1 oder 2, **dadurch gekennzeichnet, dass** die Mikrobrücke der Baselineschaltung (120, 212) eine zu derjenigen der Mikrobrücke des bolometrischen Elementardetektors (50, 204) identische Struktur hat.

4. Erfassungsvorrichtung (200) nach Anspruch 1 oder 2, **dadurch gekennzeichnet, dass** die Mikrobrücke der Baselineschaltung (120, 212) eine Struktur hat, die sich von derjenigen der Mikrobrücke des bolometrischen Elementardetektors (50, 204) einzig darin unterscheidet, dass die Mikrobrücke der Baselineschaltung keine Widerstandslast umfasst, oder dass sie eine kurzgeschlossene Widerstandslast umfasst.

5. Erfassungsvorrichtung (200) nach einem der vorhergehenden Ansprüche, **dadurch gekennzeichnet, dass** der Abstand e, der die Mikrobrücke der Baselineschaltung von der reflektierenden Schicht trennt, kleiner als ein Zehntel der Wellenlänge der Terahertzstrahlung ist.

6. Erfassungsvorrichtung (200) nach einem der vorhergehenden Ansprüche, **dadurch gekennzeichnet, dass** der bolometrische Elementardetektor eine erste und eine zweite Kreuz-Schmetterlingsantenne (54, 68) aufweist, die dazu bestimmt sind, die elektromagnetische Strahlung aufzufangen, und dass die erste Antenne (54) außerhalb der Mikrobrücke (56) angeordnet und in kapazitiver Kopplung mit der Widerstandslast (66) ist, und dass die zweite Antenne (68) in der Mikrobrücke (56) in kapazitiver Kopplung mit der Widerstandslast (66) angeordnet ist.

7. Erfassungsvorrichtung (200) nach Anspruch 6, **dadurch gekennzeichnet, dass** die Widerstandslast (66) der Mikrobrücke des bolometrischen Elementardetektors einen Metallfilm aufweist, und dass die Mikrobrücke des bolometrischen Elementardetektors Rippen (70, 72, 74) aufweist, die der ersten Antenne auf dem Metallfilm zugewandt angeordnet sind und mit dieser in kapazitiver Kopplung stehen, so dass eine Impedanzanpassung zwischen der ersten Antenne und dem Metallfilm stattfindet.

8. Erfassungsvorrichtung (200) nach Anspruch 7, **dadurch gekennzeichnet, dass** die Rippen (70, 72, 74) mit einem elektrischen Isolator (76) bedeckt sind, wobei das thermometrische Element der Mikrobrücke des bolometrischen Elementardetektors zumindest teilweise auf dem Isolator und zumindest teilweise in Kontakt mit dem Metallfilm angeordnet ist.

9. Erfassungsvorrichtung (200) nach Anspruch 6, 7 oder 8, **dadurch gekennzeichnet, dass** die Widerstandslast der Mikrobrücke des bolometrischen Elementardetektors einen Metallfilm (66) aufweist, und dass die zweite Antenne zumindest teilweise auf diesem Metallfilm angeordnet ist.

10. Erfassungsvorrichtung (200) nach einem der Ansprüche 6 bis 9, **dadurch gekennzeichnet, dass** die erste Antenne (54) auf dem Substrat (52) angeordnet ist.

11. Erfassungsvorrichtung (200) nach einem der vorhergehenden Ansprüche, **dadurch gekennzeichnet, dass** sie eine Matrix mit einer oder zwei Dimensionen aus bolometrischen Elementardetektoren aufweist, und dass sie eine Baselineschaltung umfasst, die mit jeder Spalte der Matrix verbunden ist.

12. Erfassungsvorrichtung (200) nach einem der vorhergehenden Ansprüche, **dadurch gekennzeichnet, dass** die reflektierende Metallschicht (122) eine obere oder der projizierten Oberfläche der Mikrobrücke der Baselineschaltung gleiche Oberfläche hat.

**Claims**

1. A device (200) for detecting an electromagnetic radiation in the terahertz range, comprising at least one elementary bolometric detector (50, 204), comprising:

   ■ at least one antenna (54, 68) for collecting the terahertz electromagnetic radiation;
   ■ a microbridge (56) suspended above a substrate (52) by electrically-conductive support and thermal insulation arms (58, 62), the microbridge comprising:

      o a resistive load (66) coupled to the antenna (54, 68) to convert the electromagnetic power that it collects into thermal power; and
      o a resistive bolometric element (78) coupled to the resistive load (66) to heat up under the effect of the thermal power that it generates;

   ■ and a bias circuit (208) electrically connected to the bolometric element (78) via the support and thermal insulation arms (58, 62) to electrically bias said bolometric element and generate an electric signal depending on the electric resistance of said element,

**characterized in that** it further comprises:
■ a skimming circuit (120, 212) comprising:

o a microbridge (56) suspended above the substrate by electrically-conductive support and thermal insulation arms (56, 62), and comprising a resistive bolometric element, the microbridge of the skimming circuit being substantially identical to the microbridge of the elementary bolometric detector in terms of electric resistance, of thermal time constant, and of infrared detection;
o a reflective metal layer (122) formed on the substrate opposite to the microbridge (56), the distance separating the microbridge (56) from the reflective layer (122) being selected to obtain a destructive interference at the level of the microbridge for a wavelength of the terahertz radiation; and
o a bias circuit (218) electrically connected to the microbridge of the skimming circuit (120, 212) to electrically bias said skimming circuit and generate an electric signal depending on the electric resistance of said element; and

■ a read circuit (220) capable of being coupled to the elementary detector and to the skimming circuit to measure a difference between the electric signals that they generate.

2. The detection device (200) of claim 1, **characterized in that** the skimming circuit (120, 212) is arranged so that the corresponding microbridge receives at least part of the incident radiation on the microbridge of the elementary bolometric detector.

3. The detection device (200) of claim 1 or 2, **characterized in that** the microbridge of the skimming circuit (120, 212) has a structure identical to that of the microbridge of the elementary bolometric detector (50, 204).

4. The detection device (200) of claim 1 or 2, **characterized in that** the microbridge of the skimming circuit (120, 212) has a structure which differs from that of the microbridge of the elementary bolometric detector (50, 204) only **in that** the microbridge of the skimming circuit comprises no resistive load or **in that** it comprises a resistive load assembled in short-circuit.

5. The detection device (200) of any of the foregoing claims, **characterized in that** distance e separating the microbridge of the skimming circuit from the reflective layer is lower than one tenth of the wavelength of the terahertz radiation.

6. The detection device (200) of any of the foregoing claims, **characterized in that** the elementary bolometric detector comprises a first and a second crossed bowtie antennas (54, 68), intended to collect the electromagnetic radiation, and **in that** the first antenna (54) is arranged outside of the microbridge (56) and is capacitively coupled with the resistive load (66), and **in that** the second antenna (68) is arranged in the microbridge (56) in resistive coupling with the resistive load (66).

7. The detection device (200) of claim 6, **characterized in that** the resistive load (66) of the microbridge of the elementary bolometric detector comprises a metal film, and **in that** the microbridge of the elementary bolometric detector comprises fins (70, 72, 74) arranged opposite to the first antenna on the metal film and in capacitive coupling therewith to achieve an impedance matching between the first antenna and the metal film.

8. The detection device (200) of claim 7, **characterized in that** the fins (70, 72, 74) are covered with an electric insulator (76), the thermometric element of the microbridge of the elementary bolometric detector being at least partially arranged on said insulator and at least partially in contact with the metal film.

9. The detection device (200) of claim 6, 7, or 8, **characterized in that** the resistive load of the microbridge of the elementary bolometric detector comprises a metal film (66), and **in that** the second antenna is at least partially arranged on this metal film.

10. The detection device (200) of any of claims 6 to 9, **characterized in that** the first antenna (54) is arranged on the substrate (52).

11. The detection device (200) of any of the foregoing claims, **characterized in that** it comprises a one- or two-dimensional array of elementary bolometric detectors, and **in that** it comprises a skimming circuit associated with each column of said array.

12. The detection device of any of the foregoing claims, **characterized in that** the reflective metal layer (122) has a surface area greater than or equal to the projected surface area of the microbridge of the skimming circuit.

**Fig. 1**

Etat de la technique

**Fig. 2**

Etat de la technique

PIXEL DE REFERENCE

212

$V_{SKIM}$

214

216

218

$G_{SKIM}$

A

PIXEL

A

SELECT

210

208

$G_{DET}$

206

$V_{DET}$

204

202

230

200

204

CTIA

R1Z

226

224

A

222

VOUT

VBUS

220

212

220

228

**Fig. 4**

(Etat de la technique)

EP 2 700 922 B1

**Fig. 5**

(Etat de la technique)

**Fig. 3**

Etat de la technique

**Fig. 6**

**Fig. 7**

**Fig. 8**

Fig. 9

Fig. 10

**Fig. 11**

**Fig. 12**

Fig. 13

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2246677 A
- EP 1431731 A
- US 6329655 B

**Littérature non-brevet citée dans la description**

- **NGUYEN et al.** Simulations and measurements of the electromagnetic response of broadband THz uncooled antenna-coupled microbolometer array. *2012 19th International Conference on Microwaves, Radar & Wireless Communications,* 01 Mai 2012, 116-121

- **R. PEREZ.** Contribution à l'analyse théorique et expérimentale de radargrammes GPR : performances des antennes : apports d'une configuration multistatique. *Thèse de doctorat,* 2005